(19) **Europäisches Patentamt**

**European Patent Office**

**Office européen des brevets**

(11) **EP 0 851 210 B1**

(12) **EUROPEAN PATENT SPECIFICATION**

(45) Date of publication and mention
of the grant of the patent:
**25.06.2003 Bulletin 2003/26**

(51) Int Cl.[7]: **G01B 11/16**, G01L 1/24

(21) Application number: **97310384.9**

(22) Date of filing: **19.12.1997**

(54) **Non-contact strain meter**

Berührungslose Dehnungsmessapparatur

Dispositif de mesure de contraintes sans contact

(84) Designated Contracting States:
**DE GB**

(30) Priority: **27.12.1996 JP 35004496**

(43) Date of publication of application:
**01.07.1998 Bulletin 1998/27**

(73) Proprietor: **Japan Atomic Energy Research
Institute**
**Chiyoda-ku, Tokyo 100 (JP)**

(72) Inventors:
• **Futakawa, Masatoshi**
**Tokai-mura, Naka-gun, Ibaraki-ken 319-11 (JP)**
• **Kikuchi, Kenji**
**Tokai-mura, Naka-gun, Ibaraki-ken 319-11 (JP)**

• **Hino, Ryutaro**
**Tokai-mura, Naka-gun, Ibaraki-ken 319-11 (JP)**
• **Yanagida, Yoh, c/o ONO SOKKI Co., Ltd.**
**Yokohama-shi, Kanagawa-ken, 226 (JP)**
• **Yamamoto, Hiroshi, c/o ONO SOKKI Co., Ltd.**
**Yokohama-shi, Kanagawa-ken, 226 (JP)**

(74) Representative: **Atkinson, Jonathan David Mark**
**Haseltine Lake & Co.,**
**Imperial House,**
**15-19 Kingsway**
**London WC2B 6UD (GB)**

(56) References cited:
EP-A- 0 347 912     EP-A- 0 629 835
EP-A- 0 694 756     US-A- 4 836 031

## Description

BACKGROUND OF THE INVENTION

Field of the Invention

The present invention relates to a non-contact strain meter adapted for measuring a strain of a measuring object on a non-contact basis.

Description of the Related Art

As a conventional typical sensor for measuring a strain, there is raised a resistance wire strain gauge. According to a measurement by the resistance wire strain gauge, a sensor portion having a certain area of the resistance wire strain gauge is adhered to a measuring object to detect an averaged strain quantity in the area. For this reason, there is a limit in the point that the sensor is miniaturized and a detection resolution is enhanced. Further, in the event that the resistance wire strain gauge is used to measure a thermal strain, there is a need to perform a calibration by means of adhering a dummy gaug for a temperature coefficient compensation.

As methods of solving those drawbacks involved in the resistance wire strain gauge, there have been proposed methods of measuring a strain on a non-contact basis, such as a holography scheme and a speckle scheme. However, any of those methods leaves a common problem in such a point that they are worse in high speed responsibility.

EP 0 694 756 and EP 0 629 835 propose strain meters using laser Doppler technique at two seperate measurement points. EP 0 629 835 shows a realisation (Fig.6) wherein a laser uses the Zeeman effect to produce two coherent beams of two frequencies which illuminate both measurement points.

SUMMARY OF THE INVENTION

In view of the foregoing, it is therefore an object of the present invention to provide a non-contact strain meter having a high speed responsibility and a capability of measuring very small areas where the distances between the measuring points are very short.

To achieve the above-mentioned object, according to the present invention, there is provided a non-contact strain meter comprising:

(1) a first laser Doppler meter, including a first laser beam source and a first detector, for measuring velocity or displacement of a predetermined direction as to a predetermined first measuring point on a measuring object;
(2) a second laser Doppler meter, including a second laser beam source and a second detector, for measuring velocity or displacement of said predetermined direction as to a predetermined second measuring point on said measuring object, said predetermined second measuring point being spaced by a predetermined distance with respect to the first measuring point in said predetermined direction; and
(3) a signal processing unit for evaluating a strain of said measuring object in said predetermined direction in accordance with velocities or displacements of the first and second measuring points in said predetermined direction, which are measured by said first and second laser Doppler meters, respectively, and the distance between the first and second measuring points.

In the non-contact strain meter as mentioned above, it is preferable that each of said first and second laser Doppler meters is adapted to measure velocity of the measuring object in a predetermined direction, and said signal processing unit integrates velocities of the first and second measuring points in the predetermined direction, which are measured by said first and second laser Doppler meters, respectively, to evaluate associated displacements of the first and second measuring points in the predetermined direction, respectively, evaluates a difference between the displacements thus obtained, and divides the difference thus obtained by the distance between the first and second measuring points, thereby evaluating a strain of said measuring object in said predetermined direction. Alternatively it is also acceptable that each of said first and second laser Doppler meters is adapted to measure velocity of the measuring object in a predetermined direction, and said signal processing unit evaluates a difference between velocities of the first and second measuring points in the predetermined direction, which are measured by said first and second laser Doppler meters, respectively, integrates the difference thus obtained to evaluate a difference between associated displacements of the first and second measuring points in the predetermined direction, respectively, and divide the difference between displacements thus obtained by the distance between the first and second measuring points, thereby evaluating a strain of said measuring object in said predetermined direction.

According to the non-contact strain meter of the present invention, since there is used a laser Doppler meter as a non-contact type of velocity detection sensor or a non-contact type of displacement detection sensor, a spatial resolution is very high at the respective measuring point. Further, according to the non-contact strain meter of the present invention, since it is permitted that a distance between the first and second measuring points, or a measuring interval as a base of a strain measurement, is set up to a very short pitch, it is possible to perform a high resolution of measurement on a spatial basis for an amount of a strain.

Further, a laser Doppler meter has a very high speed frequency responsibility. Consequently, it is possible to detect even a strain of an ultra-high speed, for example, above 1 μ sec.

## BRIEF DESCRIPTION OF THE DRAWINGS

Fig. 1 is a schematic block diagram of a non-contact strain meter according to an embodiment of the present invention;
Fig. 2 is a schematic construction view of a two-beam differential laser Doppler velocimeter;
Fig. 3 is a circuit diagram of an example of a signal processing circuit in a signal processing unit; and
Fig. 4 is a circuit diagram of an alternative example of a signal processing circuit in a signal processing unit.

## DESCRIPTION OF THE PREFERRED EMBODIMENTS

Hereinafter, there will be described embodiments of the present invention.

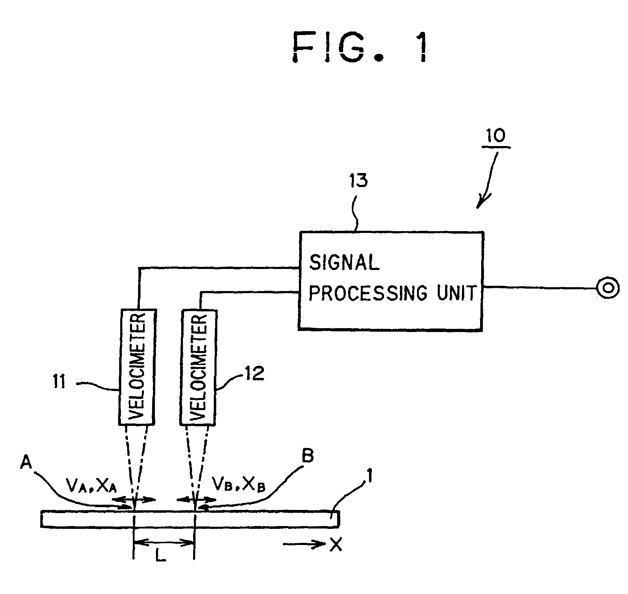

Fig. 1 is a schematic block diagram of a non-contact strain meter according to an embodiment of the present invention.

In Fig. 1, a non-contact strain meter 10 comprises a two-beam differential laser Doppler velocimeter 11 for measuring a velocity of a point A on a measuring object 1, a two-beam differential laser Doppler velocimeter 12 for measuring a velocity of a point B on the measuring object 1, and a signal processing unit 13 for evaluating a strain between the points A and B of the measuring object 1 in accordance with velocity signals on the points A and B, which are obtained by the two-beam differential laser Doppler velocimeters 11 and 12, respectively.

The two two-beam differential laser Doppler velocimeters 11 and 12 are arranged in such a manner that velocity $V_A$ and velocity $V_B$ involved in an X-direction on the points A and B of the measuring object 1, in certain planes of a surface of the measuring object 1, are measured, and further the points A and B of the measuring object 1 are set up in such they are in line in the X-direction at an interval of a distance L.

Assuming that $X_A$ and $X_B$ denote respectively displacements of the points A and B, which are obtained by means of integrations of the velocity $V_A$ and velocity $V_B$ on the points A and B derived through the two two-beam differential laser Doppler velocimeters 11 and 12, respectively, using those displacements $X_A$ and $X_B$, and the distance L between the points A and B, a strain ε between the points A and B of the measuring object 1 is expressed by the following equation (1).

$$\varepsilon = ( X_B - X_A ) / L \text{ (strain)} \qquad (1)$$

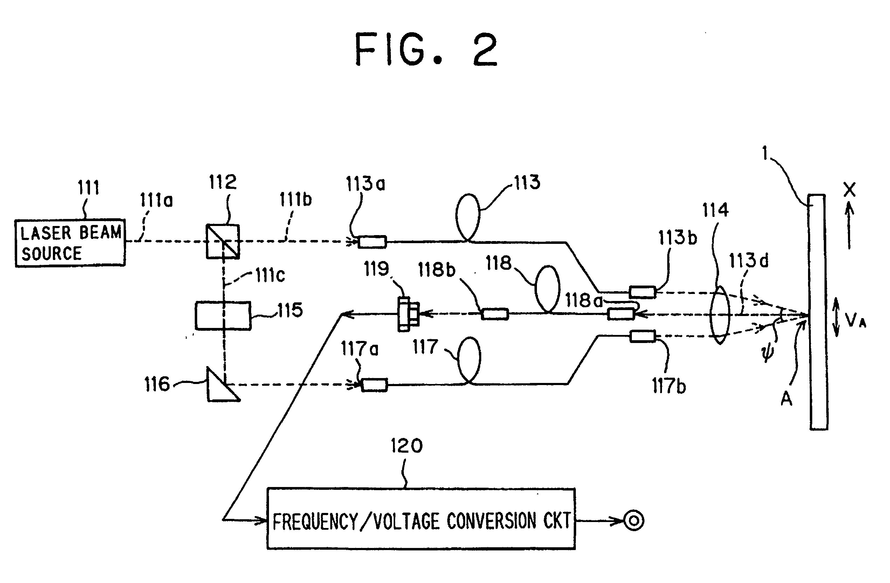

Fig. 2 is a schematic construction view of a two-beam differential laser Doppler velocimeter.

Here, there will be explained a two-beam differential laser Doppler velocimeter for measuring a velocity of the point A shown in Fig. 1. It is to be noted that a two-beam differential laser Doppler velocimeter for measuring a velocity of another point B has the same structure as that for measuring a velocity of the point A.

A laser beam 111a emitted from a laser beam source 111 is split by a beam splitter 112 into a laser beam 111b and a laser beam 111c. One of the splitted laser beams 111b and 111c, or the laser beam 111b, is launched through an incident terminal 113a into an optical fiber 113. The laser beam 111b is introduced by the optical fiber 113 to an emission terminal 113b, and then emitted from the emission terminal 113b through a lens 114 to the point A on a surface of the measuring object 1.

On the other hand, another of the laser beams 111b and 111c splitted by the beam splitter 112, or the laser beam 111c, travels to a mirror 116 via a frequency shifter 115 in which a frequency of a laser beam is shifted on an acoustooptic basis for example, and is reflected by the mirror 116. The laser beam reflected by the mirror 116 is launched through an incident terminal 117a into an optical fiber 117. The laser beam 111c incident upon the optical fiber 117 is introduced by the optical fiber 117 to an emission terminal 117b, and then emitted from the emission terminal 117b through the lens 114 to the point A on the surface of the measuring object 1 with an angle different by a relative angle ψ with respect to the laser beams 111b. In this manner, the same point A is irradiated with the laser beams in mutually different angles. Thus, in vicinity of the point A, there is produced interference fringes which repeatedly appear in an X-direction at intervals of the pitch according to wavelength λ of the laser beam emitted from the laser beam source 111 and the relative angle ψ. It is to be noted, however, that since the laser beam 111c undergoes the frequency shift by the frequency shifter 115, the produced interference fringes are ones which flow in the X-direction at the speed according to the frequency difference between the two laser beams 111b and 111c.

A laser beam 113d, which is reflected on the point A of the measuring object 1 in a vertical direction with respect to the surface of the measuring object 1, travels via the lens 114 to an incident terminal 118a and is launched into an optical fiber 118. Then, the laser beam is introduced by the optical fiber 118 to an emission terminal 118b and is emitted from the emission terminal 118b into a photo detector, or a light receiving element 119. The laser beam received by the light receiving element 119 is representative of the intensity of reflected light on the point A. The light receiving element 119 outputs a signal having a frequency of a difference

between frequencies $f_1$ and $f_2$ of the two laser beams 111b and 111c, that is, $\Delta f = f_1 - f_2$. When the measuring object 1 moves in the X-direction, the frequency $\Delta f$ of the signal varies by a Doppler frequency $f_{dA}$.

$$f_{dA} = (2 V_A / \lambda) \sin(\psi / 2) \qquad (2)$$

Where $V_A$ is a moving velocity of the point A in the X-direction. The moving velocity $V_A$ may take both the positive and negative values.

Thus, the light receiving element 119 generates the signal having the frequency $\Delta f + f_{dA}$. This signal is fed to a frequency/voltage converting circuit 120 which generates a voltage signal (velocity signal) proportional to the moving velocity $V_A$ of the point A of the measuring object 1.

$$V_A = (f_{dA} \cdot \lambda) / \{2 \sin(\psi / 2)\} \qquad (3)$$

Incidentally, according to the two-beam differential laser Doppler velocimeter shown in Fig. 2, the optical fibers 113 and 117 are used to introduce the laser beams to the vicinity of the measuring object 1, and then the reflected light are introduced by the optical fibers 118 to the light receiving element 119. However, the reason why this is to do so is that a measurement head including the lens 114 is separated from a main frame of the velocimeter so that the measurement head can be disposed as one likes, and there is no need in principle to use the optical fibers.

In a similar fashion as to the matter of the two-beam differential laser Doppler velocimeter 12 shown in Fig. 1, it is possible to obtain the velocity signal on the point B.

$$V_B = (f_{dB} \cdot \lambda) / \{2 \sin(\psi / 2)\} \qquad (4)$$

Two velocity signals $V_A$ and $V_B$, which are obtained by the two two-beam differential laser Doppler velocimeters 11 and 12, respectively, are fed to the signal processing unit 13.

Fig. 3 is a circuit diagram of an example of a signal processing circuit in the signal processing unit 13.

The entered velocity signals $V_A$ and $V_B$ are integrated by integrators 131 and 132, respectively, to generate displacement signals $X_A$ and $X_B$ on the points A and B.

$$X_A = \int V_A \, dt \qquad (5)$$

$$X_B = \int V_B \, dt \qquad (6)$$

Thereafter, a difference between the displacement signals $X_A$ and $X_B$, or $X_A - X_B$, is evaluated by a differentiator 133, and then a strain $\varepsilon$ is evaluated by a divider 134.

$$\varepsilon = (X_A - X_B) / L \qquad (7)$$

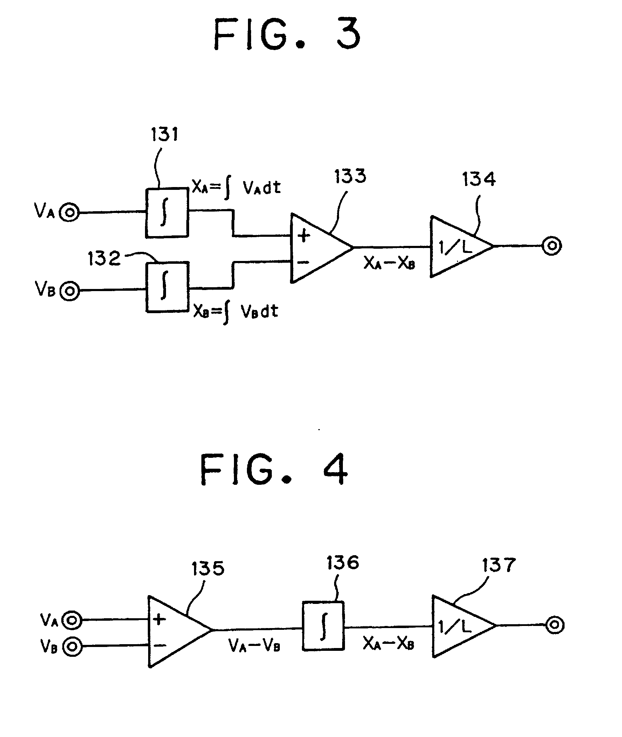

Fig. 4 is a circuit diagram of an alternative example of a signal processing circuit in the signal processing unit 13.

The entered velocity signals $V_A$ and $V_B$ are supplied to a differentiator 135 to evaluate a difference between the velocity signals $V_A$ and $V_B$, or $V_A - V_B$, and the difference $V_A - V_B$ is converted into a difference of a displacement.

$$X_A - X_B = \int (V_A - V_B) \, dt \qquad (8)$$

A strain $\varepsilon$ is evaluated by a divider 137.

$$\varepsilon = (X_A - X_B) / L \qquad (9)$$

Incidentally, according to the embodiment as mentioned above, the two two-beam differential laser Doppler velocimeters 11 and 12 are used to obtain the velocity signals $V_A$ and $V_B$, and the velocity signals $V_A$ and $V_B$ are supplied to the signal processing unit 13. However, it is acceptable that the two two-beam differential laser Doppler velocimeters 11 and 12 are replaced by two two-beam differential laser Doppler displacement meters to obtain displacement signals $X_A$ and $X_B$, and the displacement signals $X_A$ and $X_B$ are supplied to the signal processing unit to evaluate a strain $\varepsilon$. In this case, for example, the integrators 131 and 132 of the signal processing circuit shown in Fig. 3 become unnecessary. A principle of the two-beam differential laser Doppler displacement meter is similar to that of the two two-beam differential laser Doppler velocimeter explained referring to Fig. 2 but a different point that the obtained velocity signals are integrated, and the displacement signals are produced and then outputted to the exterior.

Further according to the embodiment as mentioned above, the signal processing unit has the signal processing circuit on a hardware basis. However, although it is necessary to consider a high speed responsibility, it is acceptable that the velocity signals $V_A$ and $V_B$, or the displacement signals $X_A$ and $X_B$, are converted into digital signals, and a strain $\varepsilon$ is evaluated by a digital signal processing.

According to the embodiment as mentioned above, it is possible to stop a beam down to a diameter of the order of several $\mu$m on the measuring object. This feature makes it possible to perform a measurement under such a condition that a measurement area is very small and a measurement space between points A and B is very short, thereby measuring a strain of very small area and also measuring a spatial distribution of a strain with a high spatial resolution.

Further, according to the embodiment as mentioned above, since there is adopted a laser Doppler system, it is possible to provide a strain meter excellent in a high speed responsibility thereby grasp a ultra-high speed of strain phenomenon.

Further, according to the laser Doppler system, a velocity or a displacement of a measuring object as to an optical axis direction of a measurement light is not detected. Therefore, it is possible to implement a greater accuracy of measurement excluding an error due to a movement in the optical axis direction.

As explained above, according to a non-contact strain meter of the present invention, it is possible to perform a strain measurement with high speed and high resolution in such a level that it is unavailable by any of the conventional various types of strain measurement schemes.

While the present invention has been described with reference to the particular illustrative embodiments, it is not to be restricted by those embodiments but only by the appended claims. It is to be appreciated that those skilled in the art can change or modify the embodiments without departing from the scope of the present invention as defined by the claims.

**Claims**

1. A non-contact strain meter comprising:

   a first laser Doppler meter (11), including a first laser beam source (111) and a first detector (119), for measuring velocity ($V_A$) or displacement ($X_A$) in a predetermined direction as to a predetermined first measuring point (A) on a measuring object (1);
   a second laser Doppler meter (12), including a second laser beam source and a second detector, for measuring velocity ($V_B$) or displacement ($X_B$) of said predetermined direction as to a predetermined second measuring point (B) on said measuring object (1), said predetermined second measuring point (B) being spaced by a predetermined distance (L) with respect to the first measuring point (A) in said predetermined direction; and
   a signal processing unit for evaluating a strain of said measuring object (1) in said predetermined direction in accordance with velocities or displacements of the first (A) and second (B) measuring points in said predetermined direction, which are measured by said first (11) and second (12) laser Doppler meters, respectively, and the distance between the first (A) and second (B) measuring points.

2. A non-contact strain meter according to claim 1, wherein each of said first (11) and second (12) laser Doppler meters is adapted to measure velocity of the measuring object (1) in a predetermined direction, and said signal processing unit integrates velocities of the first (A) and second (B) measuring points in the predetermined direction, which are measured by said first (11) and second (12) laser Doppler meters, respectively, to evaluate associated displacements of the first (A) and second (B) measuring points in the predetermined direction, respectively, evaluates a difference between the displacements thus obtained, and divides the difference thus obtained by the distance between the first (A) and second (B) measuring points, thereby evaluating a strain of said measuring object (1) in said predetermined direction.

3. A non-contact strain meter according to claim 1, wherein each of said first (11) and second (12) laser Doppler meters is adapted to measure velocity of the measuring object (1) in a predetermined direction, and said signal processing unit evaluates a difference between velocities of the first (A) and second (B) measuring points in the predetermined direction, which are measured by said first (11) and second (12) laser Doppler meters, respectively, integrates the difference thus obtained to evaluate a difference between associated displacements of the first (A) and second (B) measuring points in the predetermined direction, respectively, and divide the difference between displacements thus obtained by the distance between the first (A) and second (B) measuring points, thereby evaluating a strain of said measuring object (1) in said predetermined direction.

4. A non-contact strain meter according to any preceding claim, in which each laser Doppler meter includes optical fibres (113, 117; 118) which are used to transmit their respective laser beams towards the respective measuring points (A, B) and to transmit the reflected light to the detectors.

5. A non-contact strain meter according to any preceding claim, in which each laser Doppler meter includes a beam splitter (112) and an acoustooptic device (115) for shifting the frequency of a split laser beam.

**Patentansprüche**

1. Berührungslose Dehnungsmessapparatur umfassend: ein erstes Laser-Doppler-Messgerät (11) mit einer ersten Laserstrahlquelle (111) und einem ersten Detektor (119) zum Messen der Geschwindigkeit ($V_A$) oder der Verschiebung ($X_A$) in einer vorbestimmten Richtung eines vorbestimmten ersten Messpunkts (A) auf einem Messobjekt (1);

ein zweites Laser-Doppler-Messgerät (12) mit einer zweiten Laserstrahlquelle und einem zweiten Detektor zum Messen der Geschwindigkeit ($V_B$) oder der Verschiebung ($X_B$) in der vorbestimmten Richtung eines vorbestimmten zweiten Messpunkts (B) auf dem Messobjekt (1), wobei der vorbestimmte zweite Messpunkt (B) in einem vorbestimmten Abstand (L) zum ersten Messpunkt (A) in der vorbestimmten Richtung angeordnet ist; und

eine Signalverarbeitungseinheit zur Ermittlung einer Dehnung des Messobjekts (1) in der vorbestimmten Richtung anhand der Geschwindigkeit oder der Verschiebung des ersten (A) und des zweiten (B) Messpunkts in der vorbestimmten Richtung, die von dem ersten (11) bzw. zweiten (12) Laser-Doppler-Messgerät gemessen wird, und des Abstands zwischen dem ersten (A) und dem zweiten (B) Messpunkt.

2. Berührungslose Dehnungsmessapparatur nach Anspruch 1, **dadurch gekennzeichnet, dass** sowohl das erste (11) als auch das zweite (12) Laser-Doppler-Messgerät zum Messen der Geschwindigkeit des Messobjekts (1) in einer vorbestimmten Richtung eingerichtet sind und dass die Signalverarbeitungseinheit die Geschwindigkeit des ersten (A) und des zweiten (B) Messpunkts in der vorbestimmten Richtung, die von dem ersten (11) bzw. zweiten (12) Laser-Doppler-Messgerät zur Ermittlung der damit verbundenen Verschiebung des ersten (A) bzw. des zweiten (B) Messpunkts in der vorbestimmten Richtung gemessen wurde, integriert, eine Differenz zwischen den auf diese Weise erhaltenen Verschiebungen ermittelt und die auf diese Weise erhaltene Differenz durch den Abstand zwischen dem ersten (A) und dem zweiten (B) Messpunkt dividiert, wodurch eine Dehnung des Messobjekts (1) in der vorbestimmten Richtung ermittelt wird.

3. Berührungslose Dehnungsmessapparatur nach Anspruch 1, **dadurch gekennzeichnet, dass** sowohl das erste (11) als auch das zweite (12) Laser-Doppler-Messgerät zum Messen der Geschwindigkeit des Messobjekts (1) in einer vorbestimmten Richtung eingerichtet sind und dass die Signalverarbeitungseinheit eine Differenz zwischen der Geschwindigkeit des ersten (A) und des zweiten (B) Messpunkts in der vorbestimmten Richtung, die von dem ersten (11) bzw. dem zweiten (12) Laser-Doppler-Messgerät gemessen wurde, ermittelt, die auf diese Weise erhaltene Differenz zur Ermittlung einer Differenz zwischen dem verbundenen Verschiebungen des ersten (A) bzw. zweiten (B) Messpunktes in der vorbestimmten Richtung integriert und die auf diese Weise erhaltene Differenz zwischen den Verschiebungen durch den Abstand zwischen dem ersten (A) und zweiten (B) Messpunkt dividiert, wodurch eine Dehnung des Messobjekts (1) in der vorbestimmten Richtung ermittelt wird.

4. Berührungsloser Dehnungsmesser nach einem der vorstehenden Ansprüche, wobei jedes Laser-Doppler-Messgerät Lichtleiter (113, 117; 118) umfasst, die zur Übertragung ihrer jeweiligen Laserstrahlen auf die jeweiligen Messpunkte (A, B) und zur Übertragung des reflektierten Lichts zu den Detektoren benutzt werden.

5. Berührungsloser Dehnungsmesser nach einem der vorstehenden Ansprüche, wobei jedes Laser-Doppler-Messgerät einen Strahlenteiler (112) und ein akusto-optisches Gerät (115) zur Verschiebung der Frequenz eines geteilten Laserstrahls umfasst.

**Revendications**

1. Dispositif de mesure de contraintes sans contact comprenant: un premier dispositif de mesure Doppler à laser (11), comportant une première source laser (111) et un premier détecteur (119), pour mesurer la vitesse ($V_A$) ou le déplacement ($X_A$) dans une direction prédéfinie en un premier point de mesure prédéfini (A) sur un objet de mesure (1);

un deuxième dispositif de mesure Doppler à laser (12), comportant une deuxième source laser et un deuxième détecteur, pour mesurer la vitesse ($V_B$) ou le déplacement ($X_B$) dans ladite direction prédéfinie en un deuxième point de mesure prédéfini (B) sur ledit objet de mesure (1), ledit deuxième point de mesure prédéfini (B) étant espacé d'une distance prédéfinie (L) par rapport au premier point de mesure (A) dans ladite direction prédéfinie ; et

une unité de traitement du signal pour évaluer une contrainte dudit objet de mesure (1) dans ladite direction prédéfinie d'après les vitesses ou les déplacements des premier (A) et deuxième (B) points de mesure dans ladite direction prédéfinie, qui sont mesurés respectivement par lesdits premier (11) et deuxième (12) dispositifs de mesure Doppler à laser, et la distance entre les premier (A) et deuxième (B) points de mesure.

2. Dispositif de mesure de contraintes sans contact selon la revendication 1, dans lequel chacun desdits premier (11) et deuxième (12) dispositifs de mesure Doppler à laser est adapté pour mesurer la vitesse de l'objet de mesure (1) dans une direction prédéfinie, et ladite unité de traitement du signal intègre les vitesses des premier (A) et deuxième (B) points de mesure dans la direction prédéfinie, qui sont mesurées respectivement par lesdits premier (11) et deuxième (12) dispositifs de mesure Doppler à laser pour évaluer les déplacements associés des premier (A) et deuxième (B) points de mesure dans la direction prédéfinie, respectivement, évalue une différence entre les déplacements ainsi obtenus, et divise la différence ainsi obtenue par la distance entre le premier (A) et le deuxième (B) points de mesure, évaluant de ce fait une contrainte dudit objet de mesure (1) dans ladite direction prédéfinie.

3. Dispositif de mesure de contraintes sans contact selon la revendication 1, dans lequel chacun desdits premier (11) et deuxième (12) dispositifs de mesure Doppler à laser est adapté pour mesurer la vitesse de l'objet de mesure (1) dans une direction prédéfinie, et ladite unité de traitement du signal évalue une différence entre les vitesses des premier (A) et deuxième (B) points de mesure dans la direction prédéfinie, qui sont mesurées respectivement par lesdits premier (11) et deuxième (12) dispositifs de mesure Doppler à laser, intègre la différence ainsi obtenue pour évaluer une différence entre les déplacements associés des premier (A) et deuxième (B) points de mesure dans la direction prédéfinie, respectivement, et divise la différence entre les déplacements ainsi obtenue par la distance entre le premier (A) et le deuxième (B) points de mesure, évaluant de ce fait une contrainte dudit objet de mesure (1) dans ladite direction prédéfinie.

4. Dispositif de mesure de contraintes sans contact selon l'une quelconque des revendications précédentes, dans lequel chaque dispositif de mesure Doppler à laser comporte des fibres optiques (113, 117 ; 118) qui sont utilisées pour transmettre leurs faisceaux laser respectifs vers les points de mesure respectifs (A, B) et pour transmettre la lumière réfléchie aux détecteurs.

5. Dispositif de mesure de contraintes sans contact selon l'une quelconque des revendications précédentes, dans lequel chaque dispositif de mesure Doppler à laser comporte un séparateur de faisceau (112) et un dispositif acousto-optique (115) pour décaler la fréquence d'un faisceau laser séparé.

# FIG. 1

# FIG. 2

EP 0 851 210 B1

# FIG. 3

131

$X_A = \int V_A dt$

133

134

$V_A$

132

$X_B = \int V_B dt$

$V_B$

+

−

$X_A - X_B$

1/L

# FIG. 4

135

136

137

$V_A$

$V_B$

+

−

$V_A - V_B$

∫

$X_A - X_B$

1/L